# EUROPEAN PATENT APPLICATION

(11) **EP 4 807 829 A1**
(43) Date of publication of application: **16.09.2026**
(21) Application number: 24926638.8
(22) Date of filing: 30.07.2024
(51) Int. Cl.: H01M 10/04, H01M 50/249, H01M 50/204

(54) **HEATING DEVICE AND BATTERY PROCESSING SYSTEM**

(30) Priority: 26.02.2024 CN 202410211309
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: CHEN, Guochao, Ningde, Fujian 352100 (CN); JIANG, Chaoqun, Ningde, Fujian 352100 (CN); BAI, Guoxi, Ningde, Fujian 352100 (CN); LI, Jinyuan, Ningde, Fujian 352100 (CN)
(74) Representative: Kraus & Lederer PartGmbB
(86) International application number: PCT/CN2024/108646
(87) International publication number: WO 2025/179770

(57) **Abstract**

The present application applies to the technical field of power batteries. Provided are a heating apparatus (100) and a battery processing system. The heating apparatus includes: a bottom plate (10) provided with a first position and a second position that are disposed in a staggered manner, the second position being configured for placement of a battery module (200); a bracket (30) movably connected to the bottom plate and configured to move between the first position and the second position; and a positioning assembly (40) movably disposed on the bracket, where in a case where the bracket moves to the first position, the positioning assembly at least partially provides clearance for an area above the second position; in a case where the bracket moves to the second position, the positioning assembly is above the second position and is movable in a direction close to the bottom plate. The heating apparatus provided in the present application can be located on one side of the first position, and leave an area above the first position and the other side of the first position clear, thereby reducing the situation that the battery module collides with the positioning assembly or the bracket during a transfer process.

## Description

The present application claims priority to Chinese Patent Application No. 202410211309.9 filed with China National Intellectual Property Administration on February 26, 2024, and entitled "HEATING APPARATUS AND BATTERY PROCESSING SYSTEM", which is incorporated herein by reference in its entirety.

### TECHNICAL FIELD

The present application relates to the technical field of power batteries, and in particular, to a heating apparatus and a battery processing system.

### BACKGROUND

Energy conservation and emission reduction are the key to sustainable development of the automobile industry. Electric vehicles have become an important part of the sustainable development of the automobile industry due to their energy-saving and environmental protection advantages. For electric vehicles, the battery technology is an important factor in their development.

During production and processing of batteries, the battery module needs to be heated to improve the reliability of the batteries. However, during heating and pressure application to the battery module, the battery module generally needs to be fixed by using a positioning structure. During the process of transporting the battery module to the heating apparatus, the device for transferring the battery module is affected by the positioning structure; the space available for transferring the battery is limited, such that collision with the positioning structure may easily occur, causing damage to the battery module or the transfer device.

### SUMMARY

In view of the above problems, the present application provides a heating apparatus and a battery processing system, which can reduce the influence on a battery module transfer device.

In a first aspect, embodiments of the present application provide a heating apparatus for heating a battery module. The heating apparatus includes:
a bottom plate provided with a first position and a second position that are disposed in a staggered manner, the second position being configured for placement of the battery module;
a bracket movably connected to the bottom plate and configured to move between a first position and a second position; and
a positioning assembly configured to press an electrode terminal of the battery module.

The positioning assembly is movably disposed on the bracket; in a case where the bracket moves to the first position, the positioning assembly at least partially provides clearance for an area above the second position; in a case where the bracket moves to the second position, the positioning assembly is above the second position and is movable in a direction close to the bottom plate.

In the technical solutions of the embodiments, the positioning assembly is staggered with respect to the second position when the bracket is in the first position. In this case, the positioning assembly and the bracket can be on one side of the second position, while the area above the second position and the other side of the second position are left clear, thereby reducing the interference of the bracket and the positioning assembly with the transfer process of the battery module, and reducing the situation that the battery module collides with the positioning assembly or the bracket during the transfer process. In addition, the positioning assembly can be above the battery module when the bracket is in the second position, and the positioning assembly can move toward the bottom plate in this case, thereby pressing and fixing the battery module to the bottom plate.

In some embodiments, in the case where the bracket moves to the first position, an orthographic projection of the positioning assembly on the bottom plate and the second position are disposed in a staggered manner.

In the technical solutions of the embodiments, the orthographic projection of the positioning assembly on the bottom plate and the second position are disposed in a staggered manner when the positioning assembly is in the first position, such that the positioning assembly can be completely staggered with respect to the second position when being in the first position, and the positioning assembly does not obstruct the space right above the second position, thereby further reducing the interference with the transfer process of the battery module.

In some embodiments, the bracket is movably disposed in a width direction of the bottom plate, and the first position and the second position are sequentially arranged in the width direction of the bottom plate.

In the technical solutions of the embodiments, the bracket moves in the width direction of the bottom plate so as to reduce the movement distance of the bracket, thereby enabling the positioning assembly to move to the first position together with the bracket more rapidly, reducing the interference with the transfer process of the battery module, and improving the production efficiency.

In some embodiments, a first guide structure and a first driving member are disposed on the bottom plate, the bracket is slidably connected to the first guide structure, and the first driving member is configured to drive the bracket to slide along the first guide structure.

The technical solutions of the embodiments provide some specific structures for the bracket to be movably disposed on the bottom plate. The first driving member can drive the bracket to move along the first guide structure, thereby driving the positioning assembly to move synchronously.

In some embodiments, the positioning assembly includes a first pressing structure and a second pressing structure, the first pressing structure and the second pressing structure being configured to press electrode terminals corresponding to two electrodes of the battery module, respectively.

The first pressing structure is movable in a first direction relative to the second pressing structure so as to move close to or away from the second pressing structure.

In the technical solutions of the embodiments, the positioning assembly includes the first pressing structure and the second pressing structure, such that electrode terminals at different positions can be pressed by the first pressing structure and the second pressing structure. The first pressing structure is movable relative to the second pressing structure, such that the first pressing structure and the second pressing structure can adapt to battery modules of various specifications, thereby pressing electrode terminals of battery modules of various specifications.

In some embodiments, the first pressing structure includes a first base capable of moving close to or away from the second pressing structure, at least two first pressing members are sequentially disposed on the first base in a second direction, and the first pressing members are configured to press at least two electrode terminals, arranged in the second direction, of the battery module.

The second direction is perpendicular to the first direction.

In the technical solutions of the embodiments, the first pressing structure includes a plurality of first pressing members, and each first pressing member can press two or more electrode terminals; that is, the first pressing member has a certain length in the arrangement direction of the electrode terminals. When the spacings between the electrode terminals on battery modules of different specifications are different, this arrangement still enables the electrode terminals to be pressed without the need for adjustment. In addition, two or more first pressing members are provided, such that the length of each first pressing member in the arrangement direction of the electrode terminals is not excessively large, thereby reducing the possibility of uneven pressing by the first pressing members.

In some embodiments, a first elastic member is disposed between the first pressing member and the first base.

In the technical solutions of the embodiments, the first elastic member is disposed between the first pressing member and the first base. After the first pressing member is in abutting contact with the electrode terminal, the first base can continue to move in a direction close to the battery module so as to compress the first elastic member, such that the first elastic member can apply a pressing force to the electrode terminal via the first pressing member, thereby improving the pressing effect. In addition, the first elastic member can further provide buffering when the first pressing member presses the electrode terminal, thereby reducing possible collision damage to the electrode terminal caused by contact between the first pressing member and the electrode terminal.

In some embodiments, the second pressing structure includes a second base, at least two second pressing members are sequentially disposed on the second base in the second direction, and the second pressing members are configured to press at least two electrode terminals, arranged in the second direction, of the battery module.

The second direction is perpendicular to the first direction.

Similar to the first pressing structure, in the technical solutions of the embodiments, each second pressing member can press two or more electrode terminals; that is, the second pressing member has a certain length in the arrangement direction of the electrode terminals. When the spacings between the electrode terminals on battery modules of different specifications are different, this arrangement still enables the electrode terminals to be pressed without the need for adjustment. In addition, two or more second pressing members are provided, such that the length of each second pressing member in the arrangement direction of the electrode terminals is not excessively large, thereby reducing the possibility of uneven pressing by the second pressing members.

In some embodiments, a second elastic member is disposed between the second pressing member and the second base.

Similar to the first pressing structure, in the technical solutions of the embodiments, after the second pressing member is in abutting contact with the electrode terminal, the second base can continue to move in the direction close to the battery module so as to compress the second elastic member, and apply a pressing force to the electrode terminal via the second elastic member, thereby improving the pressing effect. In addition, the second elastic member can further provide buffering when the second pressing member presses the electrode terminal, thereby reducing possible collision damage to the electrode terminal caused by contact between the second pressing member and the electrode terminal.

In some embodiments, two first pressing structures and two second pressing structures are provided, the two second pressing structures are disposed adjacent to each other, and the second pressing structures are located between the two first pressing structures.

In the technical solutions of the embodiments, the two first pressing structures and the two second pressing structures are provided, such that the positioning assembly can press a battery module provided with two battery cells in the first direction or four electrode terminals in the first direction.

In some embodiments, the positioning assembly further includes a substrate movably disposed on the bracket, and the substrate is configured to move in a direction close to or away from the bottom plate.

Both the first pressing structure and the second pressing structure are disposed on the substrate.

The technical solutions of the embodiments provide the substrate, and the substrate is used as a base for fixing structures such as the first pressing structure and the second pressing structure, such that the first pressing structure and the second pressing structure are driven to move close to or away from the battery module when the substrate is driven.

In some embodiments, the first pressing structure is movably connected to the substrate in the first direction, and the second pressing structure is fixedly connected to the substrate.

In the technical solutions of the embodiments, the second pressing structure is fixed relative to the substrate, and the first pressing structure is movable relative to the substrate. In this case, it is only necessary to adjust the position of the first pressing structure to adapt to battery modules of different specifications, which simplifies the adjustment process of the positioning assembly.

In some embodiments, a second guide structure extending in the second direction is disposed on the substrate, and the first pressing structure is slidably disposed on the second guide structure.

The technical solutions of the embodiments provide some specific structures for the first pressing structure to move relative to the substrate. By providing the second guide structure, the first pressing structure can move close to or away from the second pressing structure in the first direction.

In some embodiments, at least two connecting structures are spaced apart from each other in the first direction on the second guide structure.

The first pressing structure further includes a connecting member, and the connecting member is configured to be connected to the connecting structure so as to fix the first pressing structure.

The technical solutions of the embodiments further provide some fixing structures for the first pressing structure. The at least two connecting structures are disposed on the second guide structure, and a connecting member is disposed on the second pressing structure. After the second pressing structure moves along the second guide structure, the position of the second pressing structure can be fixed through the cooperation between the connecting member and the connecting structure.

In some embodiments, the positioning assembly further includes a second driving member disposed on the bracket, and the second driving member is configured to drive the substrate to move relative to the bracket.

In the technical solutions of the embodiments, the substrate is driven by the second driving member to move relative to the bracket, thereby driving the first pressing structure and the second pressing structure to press the electrode terminal.

In some embodiments, a third pressing structure and a fourth pressing structure spaced apart from each other in the second direction are further disposed on the substrate, and the third pressing structure and the fourth pressing structure are configured to press an end plate of the battery module.

The second direction is perpendicular to the first direction.

In the technical solutions of the embodiments, the positioning assembly includes the third pressing structure and the fourth pressing structure, such that the end plates at both ends of the battery module are pressed by the third pressing structure and the fourth pressing structure, respectively.

In some embodiments, the third pressing structure includes a third driving member disposed on the substrate and a third pressing member disposed on the third driving member, and the third driving member is configured to drive the third pressing member to move in the direction close to or away from the bottom plate.

The fourth pressing structure includes a fourth driving member disposed on the substrate and a fourth pressing member disposed on the fourth driving member, and the fourth driving member is configured to drive the fourth pressing member to move in the direction close to or away from the bottom plate.

The technical solutions of the embodiments provide some specific structures of the third pressing structure and the fourth pressing structure, such that the third driving member and the fourth driving member can move close to and press the end plate of the battery module, and the third driving member and the fourth driving member can also move away from the end plate of the battery module.

In some embodiments, the third pressing structure and/or the fourth pressing structure are detachably connected to the substrate.

In the technical solutions of the embodiments, the third pressing structure and the fourth pressing structure are detachably connected to the substrate, such that the third pressing structure and the fourth pressing structure can be mounted at different positions to adapt to battery modules of different specifications, and the replacement and maintenance of the third pressing structure and the fourth pressing structure are also facilitated.

In some embodiments, a third elastic member is disposed between the third pressing member and the third driving member, and a fourth elastic member is disposed between the fourth pressing member and the fourth driving member.

In the technical solutions of the embodiments, the third elastic member and the fourth elastic member are provided, such that the third pressing structure and the fourth pressing structure can apply a pressing force to the end plate through the deformation of the third elastic member and the fourth elastic member, thereby improving the pressing effect. In addition, the third elastic member and the fourth elastic member can further provide buffering when the third pressing member and the fourth pressing member contact the end plate, thereby reducing collision damage to the end plate.

In some embodiments, the positioning assembly further includes a fifth pressing member disposed on the substrate.

The fifth pressing member is disposed on a side, opposite to the third pressing structure, of the fourth pressing structure, and/or the fifth pressing member is disposed on a side, opposite to the fourth pressing structure, of the third pressing structure.

In the technical solutions of the embodiments, the fifth pressing member is disposed on the substrate for pressing a battery module of a specific size, thereby reducing the adjustment process of the third pressing structure and the fourth pressing structure, and further simplifying the operation process.

In some embodiments, a fifth elastic member is disposed between the fifth pressing member and the substrate.

In the technical solutions of the embodiments, the fifth elastic member is provided, such that the fifth pressing structure can apply a pressing force to the end plate through the deformation of the fifth elastic member, thereby improving the pressing effect. In addition, the fifth elastic member can further provide buffering when the fifth pressing member contacts the end plate, thereby reducing collision damage to the end plate.

In some embodiments, the heating apparatus further includes a bearing member, and the bearing member is disposed in the second position and is configured to bear the battery module.

In the technical solutions of the embodiments, the bearing member is disposed in the second position so as to support the battery module by means of the bearing member.

In some embodiments, the heating apparatus further includes heating and pressure-applying assemblies disposed on two sides of the second position, and the heating and pressure-applying assemblies are configured to heat and/or apply pressure to the battery module.

In the technical solutions of the embodiments, the heating apparatus further includes the heating and pressure-applying assemblies so as to heat the battery module by means of the heating and pressure-applying assemblies.

In a second aspect, some embodiments of the present application further provide a battery processing system. The battery processing system includes the heating apparatus according to some embodiments of the first aspect.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in embodiments of the present application, the drawings required for illustrating the embodiments or description of the prior art are briefly described below. Apparently, the drawings in the following description illustrate merely some embodiments of the present application, and those of ordinary skill in the art may still derive other drawings from these drawings without creative efforts.
FIG. 1 is a schematic three-dimensional view of a battery module according to some embodiments of the present application;
FIG. 2 is a schematic three-dimensional view of a bracket, in a first position, of a heating apparatus according to some embodiments of the present application;
FIG. 3 is a schematic three-dimensional view of a bracket, in a second position, of a heating apparatus according to some embodiments of the present application;
FIG. 4 is a schematic side view of the heating apparatus shown in FIG. 2;
FIG. 5 is a schematic front view of the heating apparatus shown in FIG. 2;
FIG. 6 is a schematic three-dimensional view of a bracket and a positioning assembly of a heating apparatus according to some embodiments of the present application;
FIG. 7 is a schematic three-dimensional view of a bracket and a positioning assembly of a heating apparatus from another perspective according to some embodiments of the present application;
FIG. 8 is a schematic front view of a bracket and a positioning assembly of a heating apparatus according to some embodiments of the present application;
FIG. 9 is a schematic bottom view of a bracket and a positioning assembly of a heating apparatus according to some embodiments of the present application;
FIG. 10 is a partially enlarged schematic view I of a portion A in FIG. 8;
FIG. 11 is a partially enlarged schematic view II of a portion A in FIG. 8;
FIG. 12 is a partially enlarged schematic view of a portion B in FIG. 8; and
FIG. 13 is a partially enlarged schematic view of a portion C in FIG. 8.

Reference numerals in the drawings have the following meanings:
100, heating apparatus;
10, bottom plate; 11, first guide structure; 12, first driving member;
20, bearing member;
30, bracket;
40, positioning assembly; 41, first pressing structure; 411, first base; 412, first pressing member; 413, first elastic member; 42, second pressing structure; 421, second base; 422, second pressing member; 423, second elastic member; 43, substrate; 431, mounting hole; 44, second guide structure; 45, second driving member; 46, third pressing structure; 461, third driving member; 462, third pressing member; 463, third elastic member; 47, fourth pressing structure; 471, fourth driving member; 472, fourth pressing member; 473, fourth elastic member; 481, fifth pressing member; 482, fifth elastic member;
50, heating and pressure-applying assembly;
200, battery module;
60, battery cell; 61, electrode terminal.

### EMBODIMENTS OF THE PRESENT DISCLOSURE

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, judging from the trends in the market, the application of power batteries is becoming increasingly widespread. Power batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing.

During production and processing of batteries, the electrode terminals in the battery module are critical components of the battery module for enabling current input and output. If the electrode terminals are loose or in poor contact, the internal resistance of the battery cell may increase, the discharging efficiency may decrease, and safety issues may even arise.

To enable a tighter connection among the components in the battery module, and to improve the charging and discharging efficiency of the battery module, currently, after the battery module is assembled, the battery module is usually subjected to a heating and pressure application operation, so as to improve the tightness of connection among the components in the battery module, reduce the connection gap, and meanwhile, improve the stability of the battery module, thereby improving the charging and discharging efficiency of the battery module, removing moisture, condensation, and the like from the battery module, and improving the safety performance of the battery module.

During battery production and processing, a heating device is usually used to heat and apply pressure to a battery module. During heating and pressure application to the battery module, the electrode terminals of the battery module need to be pressed, so as to reduce the risk of poor contact and improve the stability of the battery.

Since a plurality of battery cells in the battery module are mainly sequentially arranged along the shorter edges of the battery cells, and the electrode terminals in the battery module are generally arranged in two or four rows, two pressing structures are provided for the electrode terminals in the heating apparatus, and the two pressing structures are on two opposite sides of the battery module, respectively. The two pressing structures can move away from each other, thereby leaving space for the battery transfer apparatus (such as a robotic arm) to transfer the battery module.

In the heating apparatus of this structure, the two pressing structures occupy the space on the two sides of the battery module. When the transfer apparatus transfers the battery cells, in order to provide clearance for the pressing structures on the two sides to reduce collision damage to the battery cells, the transfer apparatus often causes the battery cells to be higher than the highest position of the pressing structures. As a result, the heating apparatus requires a relatively large overhead space to facilitate the movement of the transfer device and reduce collision damage to the battery module.

Based on the above considerations, in order to reduce interference with the battery transfer process in the heating device and reduce the space occupied by the heating apparatus, some embodiments of the present application provide a heating apparatus. A second position for placement of a battery module is provided on a bottom plate, and a bracket movable relative to the bottom plate is provided. A positioning assembly for pressing an electrode terminal is disposed on the bracket. The bracket is capable of moving to one side of the second position and driving the positioning assembly to also move to this side of the second position.

In such a heating apparatus, the positioning assembly can move together with the bracket to one side of the second position to be staggered with respect to the second position. In this case, the positioning assembly can leave space above the second position and on the side away from the bracket, such that the battery transfer apparatus can move on the side, opposite to the bracket, of the second position without making the battery module pass over the bracket and the positioning assembly, thereby reducing the requirements of the heating apparatus for the overhead space, reducing the space occupied by the heating apparatus, and also reducing collision damage to the battery module during the transfer process.

To describe the technical solutions of the present application, descriptions will be provided below with reference to specific drawings and embodiments.

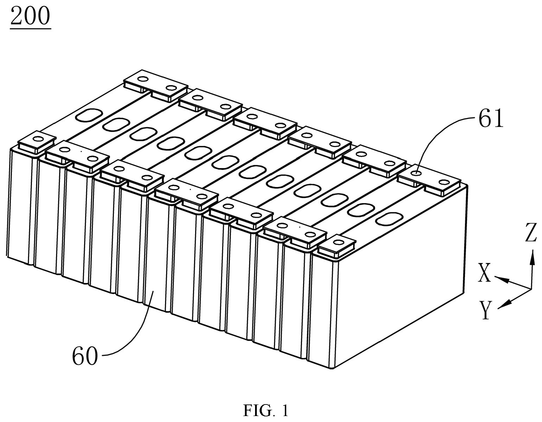

Referring to FIG. 1, FIG. 1 is a schematic three-dimensional view of a battery module 200 according to some embodiments of the present application.

In FIG. 1, the direction of the X axis is a length direction of the battery module 200, the direction of the Y axis is a width direction of the battery module 200, and the direction of the Z axis is a height direction of the battery module 200.

The battery module 200 includes a plurality of battery cells 60. The plurality of battery cells 60 may be connected in series, in parallel, or in serial-parallel. The serial-parallel connection means that both series connection and parallel connection are present for the connection among the plurality of battery cells 60. The plurality of battery cells 60 may be sequentially arranged in the length direction X of the battery module 200. In the width direction Y of the battery module 200, only one battery cell 60 may be disposed to form a single-row battery module 200, or two battery cells 60 may be disposed to form a double-row battery module 200.

Each battery cell 60 may be a secondary battery cell or a primary battery cell; it may also be a lithium-sulfur battery cell, a sodium-ion battery cell, or a magnesium-ion battery cell, but is not limited thereto. The battery cell 60 may be cylindrical, flat, rectangular parallelepiped-shaped, or in other shapes.

The battery cell 60 refers to the smallest unit forming a battery. The battery cell 60 includes an electrode terminal 61 and other functional components. The electrode terminal 61 may be configured to be electrically connected to an electrode assembly inside the battery cell 60 to output or input the electric energy of the battery cell 60.

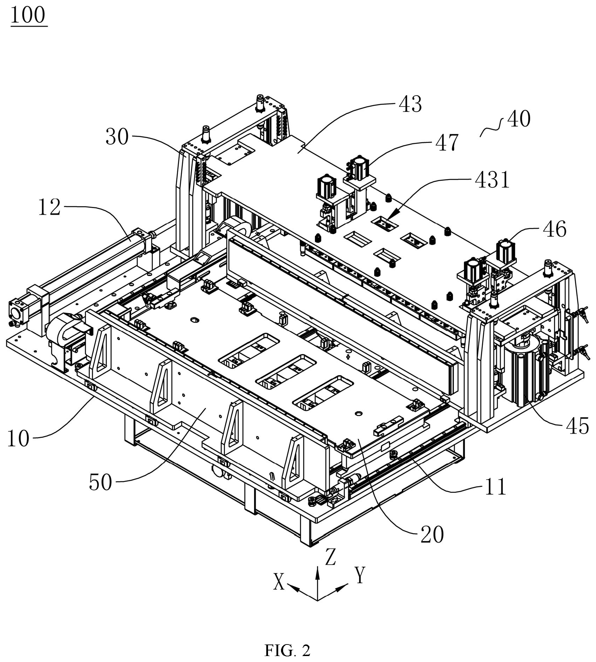

In a first aspect, some embodiments of the present application provide a heating apparatus 100 for heating a battery module 200. Referring to FIGs. 2 to 5, in FIG. 2, the direction of the X axis is a length direction of the heating apparatus 100, the direction of the Y axis is a width direction of the heating apparatus 100, and the direction of the Z axis is a height direction of the heating apparatus 100.

The heating apparatus 100 includes a bottom plate 10, a bracket 30, and a positioning assembly 40. The bottom plate 10 is provided with a first position and a second position that are disposed in a staggered manner, and the second position is configured for placement of the battery module 200. The bracket 30 is movably connected to the bottom plate 10 and is configured to move between the first position and the second position. The positioning assembly 40 is configured to press an electrode terminal 61 of the battery module 200, and the positioning assembly 40 is movably disposed on the bracket 30. In the case where the bracket 30 moves to the first position, the positioning assembly 40 at least partially provides clearance for an area above the second position. In the case where the bracket 30 moves to the second position, the positioning assembly 40 is above the second position and is movable in a direction close to the bottom plate 10.

The bottom plate 10 refers to a structure in the heating apparatus 100 that is mainly configured to serve as a base for fixing other structures, and the bottom plate 10 may also be placed on a bottom surface, a workbench, or the like, so as to support other structures of the heating apparatus 100. The shape of the bottom plate 10 may be square, circular, or other shapes. The material of the bottom plate 10 may include metal, plastic, or other materials.

The first position and the second position both refer to positions defined on the bottom plate 10. A blocking member may be disposed on the bottom plate 10 to define, in an enclosing manner, the first position and the second position, or the first position and the second position may simply be positions set on the bottom plate 10.

The second position is configured for placement of the battery module 200; that is, the battery module required to be heated may also be placed at the second position, and the heated battery module thickness may also be taken away from the second position.

The first position and the second position may be sequentially arranged in the length direction X of the heating apparatus 100, or may be sequentially arranged in the width direction Y of the heating apparatus 100, or may be sequentially arranged in other directions.

The bracket 30 refers to a structure in the heating apparatus 100 that is mainly configured to serve as a base for fixing the positioning assembly 40. The bracket 30 may be of a frame structure, a columnar structure, or other structures. The material of the bracket 30 may include metal, plastic, or other materials.

The bracket 30 is movable relative to the bottom plate 10. For example, a travel wheel may be disposed on the bracket 30, such that the bracket 30 is movable relative to the bottom plate 10 via the travel wheel. For another example, a slide slot may be provided on the bottom plate 10, and one end of the bracket 30 is slidably connected to the slide slot. For another example, a guide shaft penetrating through the bracket 30 may be provided on the bottom plate 10, such that the bracket 30 is movable along the guide shaft. It can be understood that the bracket 30 may alternatively be movably connected to the bottom plate 10 by other means, and this is not limited to the foregoing means.

The bracket 30 is movable relative to the bottom plate 10 between the first position and the second position. Since the second position is configured for placement of the battery module 200, when the bracket 30 moves to the second position, the bracket 30 is adjacent to the side of the battery module 200. It can be understood that the bracket 30 may further move to other positions in addition to the first position and the second position.

The positioning assembly 40 refers to a structure in the heating apparatus 100 that is mainly configured to press the electrode terminal 61 of the battery module 200. When the battery module 200 is placed in the second position, the positioning assembly 40 can press the electrode terminal 61. The positioning assembly 40 may include pressing posts that can press the electrode terminals 61 in a one-to-one manner, or may include pressing plates that can press a plurality of electrode terminals 61. The positioning assembly 40 may also include other structures.

The positioning assembly 40 is disposed on the bracket 30 and can move together with the bracket 30. In the case where the bracket 30 is in the first position, the positioning assembly 40 is also in the first position. In this case, the positioning assembly 40 at least partially provides clearance for the area above the second position, and the positioning assembly 40 is at least partially staggered with respect to the second position, and can expose a part of the space above the second position, or can completely expose the space above the second position to facilitate the transfer of the battery module 200. In the case where the bracket 30 is in the second position, the positioning assembly 40 can be above the second position to facilitate the pressing of the electrode terminal 61 of the battery module 200.

The positioning assembly 40 is movably disposed on the bracket 30, such that the positioning assembly 40 can move close to the battery module 200 and press the electrode terminal 61. For example, in the case where the bracket 30 is in the second position, the positioning assembly 40 is above the second position. In this case, the positioning assembly 40 may move in a direction toward the bottom plate 10 to press the electrode terminal 61. After completion of heating and pressure application treatment to the battery module 200, the positioning assembly 40 may also move in a direction away from the bottom plate 10 to be separated from the electrode terminal 61.

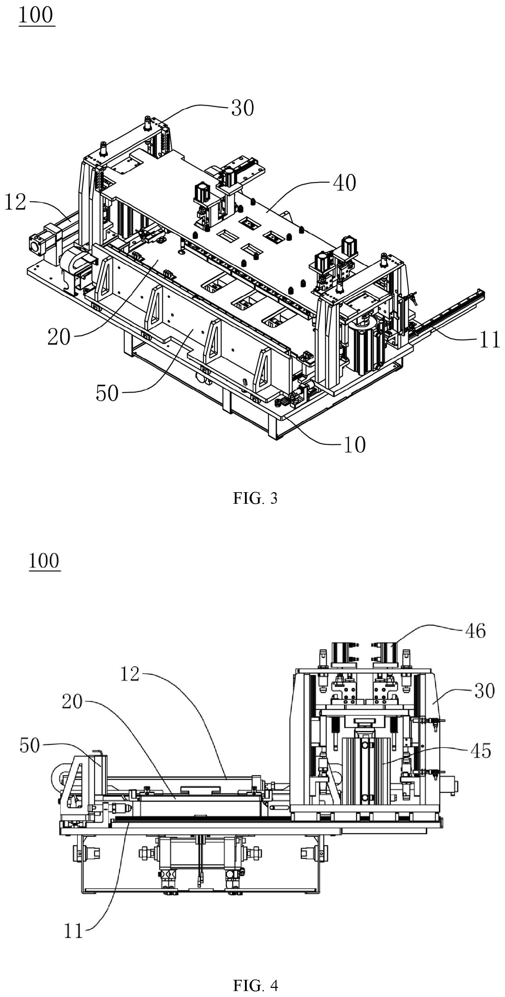

During the transfer of the battery module 200 to the heating apparatus 100, referring to FIG. 2, the bracket 30 moves toward the first position and is in the first position. In this case, the positioning assembly 40 is staggered with respect to the second position and exposes at least a part of the space above the second position. In addition, the bracket 30 and the positioning assembly 40 are only on one side of the second position to provide clearance on the other side of the second position. In this case, the battery module 200 may be transferred to the second position from the side, opposite to the bracket 30, of the second position. After the transfer of the battery module 200 to the second position, referring to FIG. 3, the bracket 30 moves toward the second position and is in the second position. In this case, the positioning assembly 40 is above the battery module 200, and the positioning assembly 40 moves close to the battery module 200 and abuts against the electrode terminal 61. After the heating and pressure application treatment to the battery module 200, the positioning assembly 40 moves away from the battery module 200 and is separated from the electrode terminal 61. Then, the bracket 30 moves toward the first position and is in the first position, such that the battery module 200 can be transferred by the transfer device to other positions.

In the embodiments, the positioning assembly 40 is at least partially staggered with respect to the second position when the bracket 30 is in the first position. In this case, the positioning assembly 40 and the bracket 30 can be on one side of the second position, while the area above the second position and the other side of the second position are left clear, thereby reducing the interference of the bracket 30 and the positioning assembly 40 with the transfer process of the battery module 200, and reducing the situation that the battery module 200 collides with the positioning assembly 40 or the bracket 30 during the transfer process. In addition, the positioning assembly 40 can be above the second position when the bracket 30 is in the second position, and the positioning assembly 40 can move toward the bottom plate 10 in this case, thereby pressing and fixing the battery module 200 to the bottom plate 10.

Referring to FIGs. 2 and 4, in some embodiments, in the case where the bracket 30 moves to the first position, the orthographic projection of the positioning assembly 40 on the bottom plate 10 and the second position are disposed in a staggered manner.

The orthographic projection of the positioning assembly 40 on the bottom plate 10 refers to a projection formed on the bottom plate 10 when a projection line of the positioning assembly 40 is perpendicular to the bottom plate 10.

The orthographic projection of the positioning assembly 40 on the bottom plate 10 and the second position being disposed in a staggered manner means that the positioning assembly 40 and a bearing member 20 are completely staggered without any overlapping portion, and the positioning assembly 40 does not obstruct the space above the bearing member 20.

This arrangement enables the positioning assembly 40 to completely expose the second position when the bracket 30 moves to the first position, which can further reduce the interference of the positioning assembly 40 with the transfer process of the battery module 200, and eliminate the need for the battery module 200 to be lifted to an excessively high position during the transfer process, thereby reducing the space occupied by the heating apparatus 100.

In the embodiments, the orthographic projection of the positioning assembly 40 on the bottom plate 10 and the second position are disposed in a staggered manner when the positioning assembly is in the first position, such that the positioning assembly 40 can be completely staggered with respect to the second position when being in the first position, and the positioning assembly 40 does not obstruct the space right above the second position, thereby further reducing the interference with the transfer process of the battery module 200.

Referring to FIG. 2, in some embodiments, the bracket 30 is movably disposed in a width direction of the bottom plate 10, and the first position and the second position are sequentially arranged in the width direction of the bottom plate 10.

The width direction of the bottom plate 10 is the direction of the Y axis in FIG. 2.

The bracket 30 being movably disposed in the width direction of the bottom plate 10 means that the bracket 30 is movable in the width direction of the bottom plate 10.

The first position and the second position are sequentially arranged in the width direction Y of the bottom plate 10, such that the bracket 30 is movable in the width direction of the bottom plate 10.

To reduce the interference of the positioning assembly 40 with the transfer process of the battery module 200, the positioning assembly 40 should be completely staggered with respect to the second position. In this case, the bracket 30 moves in the width direction Y of the bottom plate 10, which can reduce the travel distance of the bracket 30 when the positioning assembly 40 moves from the second position to the first position, thereby reducing the travel time of the bracket 30 and improving the production efficiency.

In the embodiments, the bracket 30 moves in the width direction of the bottom plate 10 so as to reduce the movement distance of the bracket 30, thereby enabling the positioning assembly 40 to move to the first position together with the bracket 30 more rapidly, reducing the interference with the transfer process of the battery module 200, and improving the production efficiency.

Referring to FIGs. 2 to 5, in some embodiments, a first guide structure 11 and a first driving member 12 are disposed on the bottom plate 10, the bracket 30 is slidably connected to the first guide structure 11, and the first driving member 12 is configured to drive the bracket 30 to slide along the first guide structure 11.

The first guide structure 11 refers to a structure in the heating apparatus 100 that is mainly configured to limit the movement direction of the bracket 30. The first guide structure 11 may be a slide slot formed in the bottom plate 10, and in this case, one end of the bracket 30 is slidably connected in the slide slot. The first guide structure 11 may also be a slide rail provided on the bottom plate 10, and in this case, the bracket 30 is slidably connected to the slide rail. The first guide structure 11 may also be a guide shaft penetrating through the bracket 30, and in this case, the bracket 30 is movable along the guide shaft. It can be understood that the first guide structure 11 may also be other structures, and is not limited to the foregoing structures. In some embodiments, the first guide structure 11 is a slide rail.

The first driving member 12 refers to a structure in the heating apparatus 100 that is mainly configured to drive the bracket 30 to move. The first driving member 12 may include a pneumatic cylinder, a hydraulic cylinder, an electric cylinder, a motor combined with a lead screw feeding structure, a motor combined with a rack-and-pinion structure, and other linear feeding structures. In some embodiments, the first driving member 12 is a pneumatic cylinder.

The first driving member 12 is disposed on the bottom plate 10 and is connected to the bracket 30 so as to drive the bracket 30 to slide along the first guide structure 11.

The embodiments provide some specific structures for the bracket 30 to be movably disposed on the bottom plate 10. The first driving member 12 can drive the bracket 30 to move along the first guide structure 11, thereby driving the positioning assembly 40 to move synchronously.

According to some embodiments of the present application, referring to FIGs. 1, and 6 to 9, the positioning assembly 40 includes a first pressing structure 41 and a second pressing structure 42. The first pressing structure 41 and the second pressing structure 42 are configured to press electrode terminals 61 corresponding to two electrodes of the battery module 200, respectively. The first pressing structure 41 is movable in a first direction relative to the second pressing structure 42 so as to move close to or away from the second pressing structure 42.

The first pressing structure 41 refers to a structure in the heating apparatus 100 that is configured to press the electrode terminal 61 in the battery module 200. The first pressing structure 41 may move close to the battery module 200 together with the positioning assembly 40 to press the electrode terminal 61, or the first pressing structure 41 may move away from the battery module 200 together with the positioning assembly 40 to be separated from the electrode terminal 61.

Similar to the first pressing structure 41, the second pressing structure 42 is also configured to press the electrode terminal 61 of the battery module 200 and move together with the positioning assembly 40.

Referring to FIG. 1, since the battery cell 60 is generally provided with two electrode terminals 61, a cathode and an anode, when the battery cells 60 form the battery module 200, the battery module 200 is generally provided with two rows of electrode terminals 61 thereon. Therefore, the first pressing structure 41 and the second pressing structure 42 are provided to press the two rows of electrode terminals 61 of the battery module 200, respectively.

Both the number of the first pressing structures 41 and the number of the second pressing structures 42 may be one. In this case, there may be only one row of battery cells 60 on the battery module 200. Both the number of the first pressing structures 41 and the number of the second pressing structures 42 may also be two. In this case, there may be two rows of battery cells 60 on the battery module 200; that is, there are four rows of electrode terminals 61 on the battery module 200 for pressing. It can be understood that the number of the first pressing structures 41 and the number of the second pressing structures 42 may be determined based on the arrangement manner of the battery cells 60 in the battery module 200, and are not limited to the foregoing one or two.

The first pressing structure 41 and the second pressing structure 42 are arranged in a first direction so as to be opposite to the two rows of electrode terminals 61 of the battery module 200, respectively; that is, the first direction is the arrangement direction of the two electrode terminals 61 on the battery cell 60. In some embodiments, the first direction is parallel to the width direction Y of the battery module 200.

The first pressing structure 41 can move close to or away from the second pressing structure 42 in the first direction. For example, both the first pressing structure 41 and the second pressing structure 42 may be configured as movable structures, or the first pressing structure 41 may be configured as a movable structure and the second pressing structure 42 may be configured as a fixed structure.

The movement of the first pressing structure 41 may be driven by a structure such as a pneumatic cylinder or a hydraulic cylinder, or the position of the first pressing structure 41 may be manually adjusted. When the second pressing structure 42 is movable, the second pressing structure 42 may also be driven by a structure such as a pneumatic cylinder or a hydraulic cylinder, or the position of the first pressing structure 41 may be manually adjusted.

The first pressing structure 41 and the second pressing structure 42 may be directly connected to the bracket 30; or the positioning assembly 40 or the bracket 30 may include another structural member, and both the first pressing structure 41 and the second pressing structure 42 are disposed on the structural member.

Since in battery modules 200 of different specifications, the distances between two rows of electrode terminals 61 may be different, the first pressing structure 41 is configured to be movable relative to the second pressing structure 42 to adapt to the battery modules 200 of different specifications. For example, during the heating of the battery module 200, the second pressing structure 42 may be positioned opposite to one row of electrode terminals 61 of the battery module 200, and then the position of the first pressing structure 41 is adjusted such that the first pressing structure is positioned opposite to the other row of electrode terminals 61, thereby pressing the two rows of electrode terminals 61 of the battery module 200.

In the embodiments, the positioning assembly 40 includes the first pressing structure 41 and the second pressing structure 42, such that electrode terminals 61 at different positions can be pressed by the first pressing structure 41 and the second pressing structure 42. The first pressing structure 41 is movable relative to the second pressing structure 42, such that the first pressing structure 41 and the second pressing structure 42 can adapt to battery modules 200 of various specifications, thereby pressing electrode terminals 61 of battery modules 200 of various specifications.

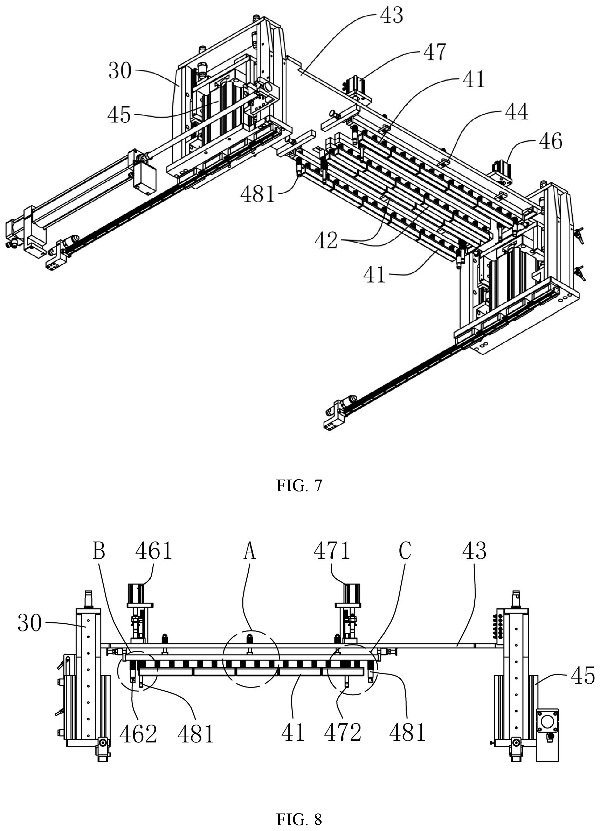

Referring to FIGs. 7 to 10, in some embodiments, the first pressing structure 41 includes a first base 411 capable of moving close to or away from the second pressing structure 42, at least two first pressing members 412 are sequentially disposed on the first base 411 in a second direction, and the first pressing members 412 are configured to press at least two electrode terminals 61, arranged in the second direction, of the battery module 200. The second direction is perpendicular to the first direction.

The first base 411 refers to a structure in the first pressing structure 41 that is configured to serve as a base for fixing structures such as the first pressing member 412. The first base 411 may be of a plate-shaped structure, such as a square plate, a circular plate, a strip-shaped plate, or plate structures of other shapes. The first base 411 may also be of a columnar structure, such as a prismatic column, a cylindrical column, or column structures of other shapes. The material of the first base 411 may include metal, plastic, or other materials.

The first pressing member 412 refers to a structure in the first pressing structure 41 that is configured to press the electrode terminal 61. The material of the first pressing member 412 may include metal, plastic, or other materials. The shape of the first pressing member 412 may be cylindrical, prismatic, or other shapes.

The first pressing member 412 can press at least two electrode terminals 61 arranged in the second direction; that is, one first pressing member 412 can press two or more electrode terminals 61 in the same row.

This arrangement enables the first pressing member 412 to adapt to battery modules 200 of various specifications. For example, when pressing a battery module 200 of a relatively small size, the first pressing member 412 can press three adjacent electrode terminals 61 in the same row, and when pressing a battery module 200 of a relatively large size, the first pressing member 412 can press two adjacent electrode terminals 61 in the same row.

This arrangement also enables the electrode terminals 61 pressed by the same first pressing member 412 to be subjected to the same or substantially the same pressing force.

The second direction refers to the arrangement direction of the electrode terminals 61 in the battery module 200, and is also the arrangement direction of the battery cells 60 in the battery module 200. In some embodiments, the second direction is parallel to the length direction X of the heating apparatus 100.

In the embodiments, the positioning assembly 40 includes the first pressing structure 41 and the second pressing structure 42, such that electrode terminals 61 at different positions can be pressed by the first pressing structure 41 and the second pressing structure 42. The first pressing structure 41 is movable relative to the second pressing structure 42, such that the first pressing structure 41 and the second pressing structure 42 can adapt to battery modules 200 of various specifications, thereby pressing electrode terminals 61 of battery modules 200 of various specifications.

Referring to FIGs. 7 to 10, in some embodiments, a first elastic member 413 is disposed between the first pressing member 412 and the first base 411.

The first elastic member 413 refers to an elastic structure in the first pressing structure 41. The first elastic member 413 may be a spring, a rubber column, or other elastic structures. The material of the first elastic member 413 may include metal, plastic, or other elastic materials.

The first elastic member 413 is disposed between the first pressing member 412 and the first base 411; that is, one end of the first elastic member 413 is connected to the first pressing member 412, and the other end of the first elastic member 413 is connected to the base. The first elastic member 413 may be detachably connected to the first pressing member 412 and the first base 411 by means of a snap-fit connection, a screw connection, or the like. The first pressing member 412 may also be fixedly connected to the first pressing member 412 and the first base 411 by means of bonding, welding, or the like.

When the first pressing structure 41 moves close to the battery module 200, the first base 411, the first elastic member 413, and the first pressing member 412 synchronously move close to the battery module 200 until the first pressing member 412 contacts the electrode terminal 61 of the battery module 200. When the first pressing member 412 contacts the electrode terminal 61, the first base 411 continues to move close to the battery module 200. In this case, the first elastic member 413 is compressed, and the elastic force of the first elastic member 413 acts on the first pressing member 412, such that the first pressing member 412 can press the electrode terminal 61.

In the embodiments, the first elastic member 413 is disposed between the first pressing member 412 and the first base 411. After the first pressing member 412 is in abutting contact with the electrode terminal 61, the first base 411 can continue to move in a direction close to the battery module 200 so as to compress the first elastic member 413, such that the first elastic member 413 can apply a pressing force to the electrode terminal 61 via the first pressing member 412, thereby improving the pressing effect. In addition, the first elastic member 413 can further provide buffering when the first pressing member 412 presses the electrode terminal 61, thereby reducing possible collision damage to the electrode terminal 61 caused by contact between the first pressing member 412 and the electrode terminal 61.

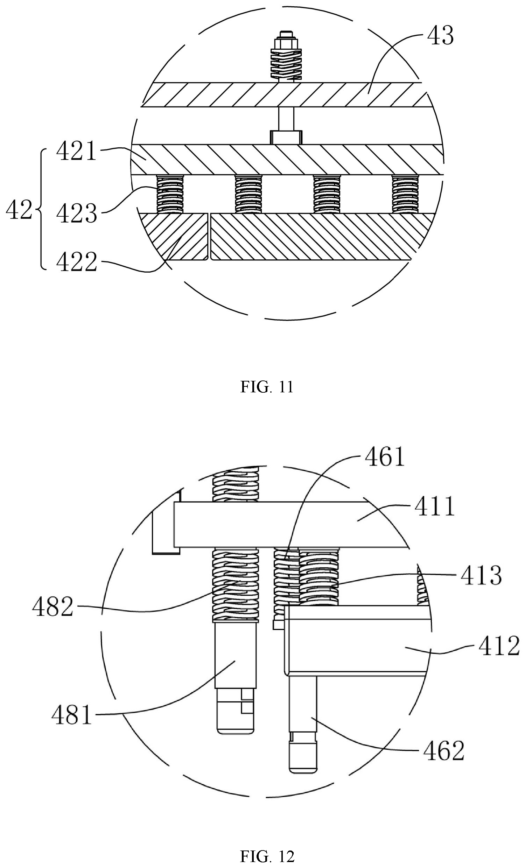

Referring to FIG. 11, in some embodiments, the second pressing structure 42 includes a second base 421, at least two second pressing members 422 are sequentially disposed on the second base 421 in the second direction, and the second pressing members 422 are configured to press at least two electrode terminals 61, arranged in the second direction, of the battery module 200. The second direction is perpendicular to the first direction.

The second base 421 refers to a structure in the second pressing structure 42 that is configured to serve as a base for fixing structures such as the second pressing member 422. The second base 421 may be of a plate-shaped structure, such as a square plate, a circular plate, a strip-shaped plate, or plate structures of other shapes. The second base 421 may also be of a columnar structure, such as a prismatic column, a cylindrical column, or column structures of other shapes. The material of the second base 421 may include metal, plastic, or other materials.

The second pressing member 422 refers to a structure in the second pressing structure 42 that is configured to press the electrode terminal 61. The material of the second pressing member 422 may include metal, plastic, or other materials. The shape of the second pressing member 422 may be cylindrical, prismatic, or other shapes.

The second pressing member 422 can press at least two electrode terminals 61 arranged in the second direction; that is, one second pressing member 422 can press two or more electrode terminals 61 in the same row.

Similar to the first pressing structure 41, the second pressing member 422 can adapt to battery modules 200 of various specifications. For example, when pressing a battery module 200 of a relatively small size, the second pressing member 422 can press three adjacent electrode terminals 61 in the same row, and when pressing a battery module 200 of a relatively large size, the second pressing member 422 can press two adjacent electrode terminals 61 in the same row.

Similar to the first pressing structure 41, the electrode terminals 61 pressed by the same second pressing member 422 can be subjected to the same or substantially the same pressing force.

Similar to the first pressing structure 41, in the embodiments, each second pressing member 422 can press two or more electrode terminals 61; that is, the second pressing member 422 has a certain length in the arrangement direction of the electrode terminals 61. When the spacings between the electrode terminals 61 on battery modules 200 of different specifications are different, this arrangement still enables the electrode terminals 61 to be pressed without the need for adjustment. In addition, two or more second pressing members 422 are provided, such that the length of each second pressing member 422 in the arrangement direction of the electrode terminals 61 is not excessively large, thereby reducing the possibility of uneven pressing by the second pressing members 422.

Referring to FIG. 11, in some embodiments, a second elastic member 423 is disposed between the second pressing member 422 and the second base 421.

The second elastic member 423 refers to an elastic structure in the second pressing structure 42. The second elastic member 423 may be a spring, a rubber column, or other elastic structures. The material of the second elastic member 423 may include metal, plastic, or other elastic materials.

The second elastic member 423 is disposed between the second pressing member 422 and the second base 421; that is, one end of the second elastic member 423 is connected to the second pressing member 422, and the other end of the second elastic member 423 is connected to the base. The second elastic member 423 may be detachably connected to the second pressing member 422 and the second base 421 by means of a snap-fit connection, a screw connection, or the like. The second elastic member 423 may also be fixedly connected to the second pressing member 422 and the second base 421 by means of bonding, welding, or the like.

When the second pressing structure 42 moves close to the battery module 200, the second base 421, the second elastic member 423, and the second pressing member 422 synchronously move close to the battery module 200 until the second pressing member 422 contacts the electrode terminal 61 of the battery module 200. When the second pressing member 422 contacts the electrode terminal 61, the second base 421 continues to move close to the battery module 200. In this case, the second elastic member 423 is compressed, and the elastic force of the second elastic member 423 acts on the second pressing member 422, such that the second pressing member 422 can press the electrode terminal 61.

Similar to the first pressing structure 41, in the embodiments, after the second pressing member 422 is in abutting contact with the electrode terminal 61, the second base 421 can continue to move in the direction close to the battery module 200 so as to compress the second elastic member 423, and apply a pressing force to the electrode terminal 61 via the second elastic member 423, thereby improving the pressing effect. In addition, the second elastic member 423 can further provide buffering when the second pressing member 422 presses the electrode terminal 61, thereby reducing possible collision damage to the electrode terminal 61 caused by contact between the second pressing member 422 and the electrode terminal 61.

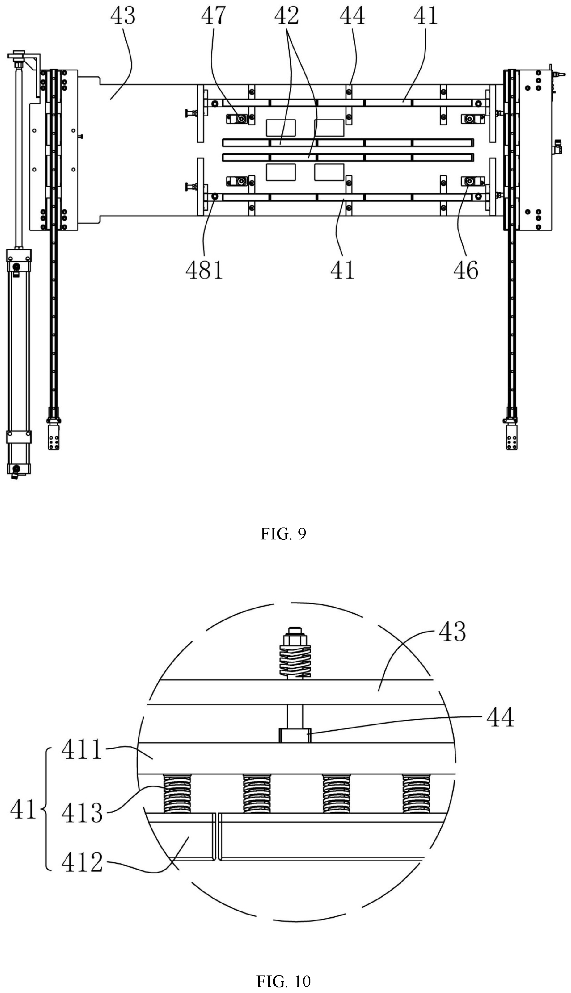

Referring to FIG. 9, in some embodiments, two first pressing structures 41 and two second pressing structures 42 are provided, the two second pressing structures 42 are disposed adjacent to each other, and the second pressing structures 42 are located between the two first pressing structures 41.

The two first pressing structures 41 are disposed adjacent to each other; that is, the two first pressing structures 41 are close to each other, and there is no second pressing structure 42 between the two first pressing structures 41.

The second pressing structure 42 is located between the two first pressing structures 41; that is, the two second pressing structures 42 are located on the outer sides of the two first pressing structures 41, respectively, and the two first pressing structures 41 are located between the two second pressing structures 42.

The battery module 200 generally includes two rows of battery cells 60; that is, the battery module 200, in this case, includes four rows of electrode terminals 61. Therefore, in this arrangement, the two second pressing structures 42 are disposed adjacent to each other and are located between the two first pressing structures 41, such that when the positioning assembly 40 presses the battery module 200, the two second pressing structures 42 may be first positioned opposite to the electrode terminals 61 of the two middle rows of the battery module 200, and then the positions of the two second pressing structures 42 are adjusted.

In the embodiments, the two first pressing structures 41 and the two second pressing structures 42 are provided, such that the positioning assembly 40 can press the battery module 200 provided with two battery cells 60 in the first direction or four electrode terminals 61 in the first direction.

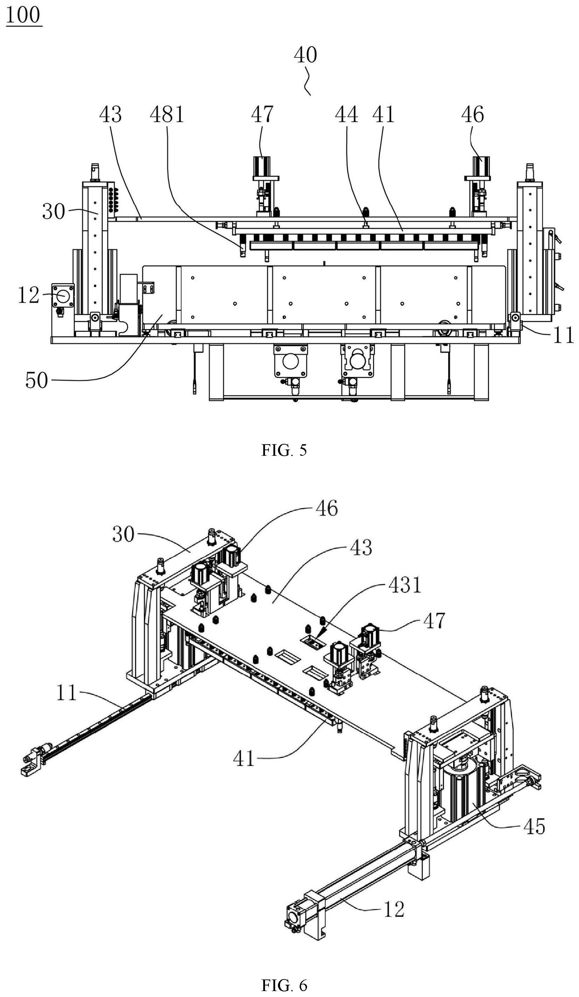

Referring to FIGs. 6 to 9, in some embodiments, the positioning assembly 40 further includes a substrate 43. The substrate 43 is movably disposed on the bracket 30, and the substrate 43 is configured to move in a direction close to or away from the bottom plate 10. Both the first pressing structure 41 and the second pressing structure 42 are disposed on the substrate 43.

The substrate 43 refers to a structure in the positioning assembly 40 that is configured to serve as a base for fixing the first pressing structure 41 and the second pressing structure 42; that is, the first pressing structure 41, the second pressing structure 42, or other structures can all be disposed on the substrate 43. For example, both the first base 411 and the second base 421 are disposed on the substrate 43.

The shape of the substrate 43 may be square, circular, or other shapes. The material of the substrate 43 may include metal, plastic, or other structures.

The substrate 43 can move in the direction close to the battery module 200 so as to drive both the first pressing structure 41 and the second pressing structure 42 to move close to the battery module 200. The substrate 43 can also move in the direction away from the battery module 200 so as to drive both the first pressing structure 41 and the second pressing structure 42 to move away from the battery module 200.

In the embodiments, the substrate 43 is used as a base for fixing structures such as the first pressing structure 41 and the second pressing structure 42, such that the first pressing structure 41 and the second pressing structure 42 are driven to move close to or away from the battery module 200 when the substrate 43 is driven.

Referring to FIGs. 6 to 9, in some embodiments, the positioning assembly 40 further includes a second driving member 45 disposed on the bracket 30, and the second driving member 45 is configured to drive the substrate 43 to move relative to the bracket 30.

The second driving member 45 refers to a structure in the positioning assembly 40 that is mainly configured to drive the bracket 30 to move. The second driving member 45 may include a pneumatic cylinder, a hydraulic cylinder, an electric cylinder, or other linear feeding devices. The second driving member 45 may also include a motor combined with a lead screw feeding structure, a motor combined with a rack-and-pinion structure, and other linear feeding structures. In some embodiments, the second driving member 45 is a pneumatic cylinder.

The second driving member 45 is disposed on the bracket 30 and is connected to the substrate 43 so as to drive the substrate 43 to move close to or away from the battery module 200.

In the embodiments, the substrate 43 is driven by the second driving member 45 to move relative to the bracket 30, thereby driving the first pressing structure 41 and the second pressing structure 42 to press the electrode terminal 61.

Referring to FIGs. 7 and 9, in some embodiments, the first pressing structure 41 is movably connected to the substrate 43 in the first direction, and the second pressing structure 42 is fixedly connected to the substrate 43.

The first pressing structure 41 is movably connected to the substrate 43 in the first direction. For example, a slide slot is formed in the substrate 43, such that the first base 411 can slide in the slide slot, thereby enabling the first pressing structure 41 to be slidable relative to the substrate 43 along the slide slot. For another example, a guide shaft is provided on the substrate 43, and the guide shaft penetrates through the first base 411, such that the first base 411 can slide relative to the substrate 43 along the guide shaft, thereby enabling the first pressing structure 41 to be slidable relative to the substrate 43 along the guide shaft. It can be understood that the first pressing structure 41 may also be movably connected to the substrate 43 by other means.

The second pressing structure 42 is fixedly connected to the substrate 43. For example, it may be that the second base 421 is fixedly connected to the substrate 43, and the second base 421 may be fixedly connected to the substrate 43 by means of welding, adhesive bonding, or the like.

When the positioning assembly 40 is required to press the electrode terminals 61, the position of the bracket 30 may be first adjusted to make the second pressing structure 42 opposite to one row of electrode terminals 61, and then the position of the first pressing structure 41 is adjusted to make the first pressing structure 41 opposite to the other row of electrode terminals 61, and then the substrate 43 is moved in the direction close to the battery module 200. It can be understood that during use of the heating apparatus 100, the specifications of the battery modules 200 that are heated and subjected to pressure are generally the same over a period of time; therefore, it is only necessary to adjust the position of the first pressing structure 41 when the specifications of the battery modules 200 change, without the need for frequent adjustments.

In the embodiments, the second pressing structure 42 is fixed relative to the substrate 43, and the first pressing structure 41 is movable relative to the substrate 43. In this case, it is only necessary to adjust the position of the first pressing structure 41 to adapt to battery modules 200 of different specifications, which simplifies the adjustment process of the positioning assembly 40.

Referring to FIG. 9, in some embodiments, a second guide structure 44 extending in the second direction is disposed on the substrate 43, and the first pressing structure 41 is slidably disposed on the second guide structure 44.

The second guide structure 44 refers to a structure in the positioning structure that is mainly configured to limit the movement direction of the first pressing structure 41. The second guide structure 44 may be a slide slot formed in the bottom plate 10, and in this case, the first base 411 is slidably connected in the slide slot. The second guide structure 44 may also be a slide rail provided on the bottom plate 10, and in this case, the first base 411 is slidably connected to the slide rail. The second guide structure 44 may also be a guide shaft penetrating through the first base 411, and in this case, the first base 411 is movable along the guide shaft. It can be understood that the second guide structure 44 may also be other structures, and is not limited to the foregoing structures. In some embodiments, the second guide structure 44 is a slide rail.

The embodiments provide some specific structures for the first pressing structure 41 to move relative to the substrate 43. By providing the second guide structure 44, the first pressing structure 41 can move close to or away from the second pressing structure 42 in the first direction.

Referring to FIG. 9, in some embodiments, at least two connecting structures are spaced apart from each other in the first direction on the second guide structure 44. The first pressing structure 41 further includes a connecting member, and the connecting member is configured to be connected to the connecting structure so as to fix the first pressing structure 41.

The connecting structure refers to a structure on the second guide structure 44 that is mainly configured to cooperate with the connecting member, and the connecting member refers to a structure in the first pressing structure 41 that is mainly configured to cooperate with the connecting structure. The connecting member may be disposed on the first base 411, or may be disposed at other positions on the first pressing structure 41. When the connecting member cooperates with the connecting structure, the first pressing structure 41 can be fixed on the substrate 43.

The connecting structure and the connecting member may be various structures that can cooperate with each other. In some embodiments, the connecting structure may be an insertion hole formed in the second guide structure 44, and in this case, the connecting member is a pin. The pin can be inserted into the insertion hole to fix the position of the first pressing structure 41, and the pin can also be removed from the insertion hole. In some other embodiments, the connecting structure may also be a snap groove, and in this case, the connecting member is a snap. The snap can be snap-fitted into the snap groove to fix the position of the first pressing structure 41, and the snap can also be released from the snap groove. It can be understood that the connecting structure and the connecting member may also be other structures, and are not limited to the foregoing two structures.

At least two connecting structures are disposed on the second guide structure 44 in the second direction, such that the first pressing structure 41 can be fixed at different positions during movement in the second direction, thereby facilitating the first pressing structure 41 pressing the electrode terminals 61 of battery modules 200 of different specifications.

The embodiments further provide some fixing structures for the first pressing structure 41. The at least two connecting structures are disposed on the second guide structure 44, and the connecting member is disposed on the second pressing structure 42. After the second pressing structure 42 moves along the second guide structure 44, the position of the second pressing structure 42 can be fixed through the cooperation between the connecting member and the connecting structure.

Referring to FIGs. 8, 9, 12, and 13, in some embodiments, a third pressing structure 46 and a fourth pressing structure 47 spaced apart from each other in the second direction are further disposed on the substrate 43. The third pressing structure 46 and the fourth pressing structure 47 are configured to press an end plate of the battery module 200.

The third pressing structure 46 refers to a structure in the heating apparatus 100 that is configured to press the end plate in the battery module 200. The third pressing structure 46 may move close to the battery module 200 together with the substrate 43 to press the end plate, or the third pressing structure 46 may move away from the battery module 200 together with the substrate 43 to be separated from the end plate.

Similar to the third pressing structure 46, the fourth pressing structure 47 is also configured to press an end plate of the battery module 200 and move together with the substrate 43.

Since both ends of the battery module 200 are generally provided with end plates, the third pressing structure 46 and the fourth pressing structure 47 are provided to press the end plates at both ends of the battery module 200, respectively.

Both the number of the third pressing structures 46 and the number of the fourth pressing structures 47 may be one. In this case, the two pressing structures may press the central positions of the corresponding end plates, respectively. The number of the third pressing structures 46 and the number of the fourth pressing structures 47 may also be two or more so as to press the corresponding end plates more uniformly.

The third pressing structure 46 and the fourth pressing structure 47 are spaced apart in the second direction to be opposite to the end plates at both ends of the battery module 200; that is, the second direction is the length direction of the battery cell 60. In some embodiments, the second direction is parallel to the length direction X of the battery module 200.

In the embodiments, the positioning assembly 40 includes the third pressing structure 46 and the fourth pressing structure 47, such that the end plates at both ends of the battery module 200 are pressed by the third pressing structure 46 and the fourth pressing structure 47, respectively.

Referring to FIGs. 8 and 12, in some embodiments, the third pressing structure 46 includes a third driving member 461 disposed on the substrate 43 and a third pressing member 462 disposed on the third driving member 461. The third driving member 461 is configured to drive the third pressing member 462 to move in the direction close to or away from the bottom plate 10.

The third driving member 461 refers to a structure in the third pressing structure 46 that is mainly configured to drive the third pressing member 462. The third driving member 461 may include a pneumatic cylinder, a hydraulic cylinder, an electric cylinder, or other linear feeding devices. In some embodiments, the third driving member 461 is a pneumatic cylinder.

The third pressing member 462 refers to a structure in the third pressing structure 46 that is mainly configured to press an end plate. The third pressing member 462 may be of a columnar structure, such as a cylindrical structure, a prismatic structure, or structures of other shapes. The shape of the third pressing member 462 may also be other regular or irregular shapes. The material of the third pressing member 462 may include metal, plastic, or other materials.

The third driving member 461 is disposed on the substrate 43 and is connected to the third pressing member 462 so as to drive the third pressing member 462 to move close to or away from the opposite end plate, thereby enabling the third pressing member 462 to press the end plate or be separated from the end plate.

Referring to FIGs. 8 and 12, in some embodiments, a third elastic member 463 is disposed between the third pressing member 462 and the third driving member 461.

The third elastic member 463 refers to an elastic structure in the third pressing structure 46. The third elastic member 463 may be a spring, a rubber column, or other elastic structures. The material of the third elastic member 463 may include metal, plastic, or other elastic materials.

The third elastic member 463 is disposed between the third driving member 461 and the third pressing member 462; that is, one end of the third elastic member 463 is connected to the third driving member 461, and the other end of the third elastic member 463 is connected to the third pressing member 462. The third elastic member 463 may be detachably connected to the third pressing member 462 and the third driving member 461 by means of a snap-fit connection, a screw connection, or the like. The third elastic member 463 may also be fixedly connected to the third pressing member 462 and the third base by means of bonding, welding, or the like.

When the third pressing structure 46 moves close to the battery module 200, the third elastic member 463 and the third pressing member 462 synchronously move close to the battery module 200 until the third pressing member 462 contacts the end plate of the battery module 200. When the third pressing member 462 contacts the electrode terminal 61, the third driving member 461 continues to drive the third pressing member 462 to move in the direction close to the battery module 200. In this case, the third elastic member 463 is compressed, and the elastic force of the third elastic member 463 acts on the third pressing member 462, such that the third pressing member 462 can press the end plate.

In addition, the third elastic member 463 can further provide buffering, thereby reducing possible collision and impact generated when the third pressing member 462 contacts the end plate.

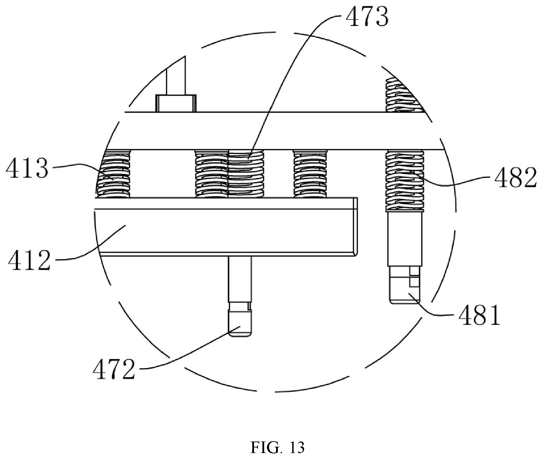

Referring to FIGs. 8 and 13, in some embodiments, the fourth pressing structure 47 includes a fourth driving member 471 disposed on the substrate 43 and a fourth pressing member 472 disposed on the fourth driving member 471. The fourth driving member 471 is configured to drive the fourth pressing member 472 to move in the direction close to or away from the bottom plate 10.

The fourth driving member 471 refers to a structure in the fourth pressing structure 47 that is mainly configured to drive the fourth pressing member 472. The fourth driving member 471 may include a pneumatic cylinder, a hydraulic cylinder, an electric cylinder, or other linear feeding devices. In some embodiments, the fourth driving member 471 is a pneumatic cylinder.

The fourth pressing member 472 refers to a structure in the fourth pressing structure 47 that is mainly configured to press an end plate. The fourth pressing member 472 may be of a columnar structure, such as a cylindrical structure, a prismatic structure, or structures of other shapes. The shape of the fourth pressing member 472 may also be other regular or irregular shapes. The material of the fourth pressing member 472 may include metal, plastic, or other materials.

The fourth driving member 471 is disposed on the substrate 43 and is connected to the fourth pressing member 472 so as to drive the fourth pressing member 472 to move close to or away from the opposite end plate, thereby enabling the fourth pressing member 472 to press the end plate or be separated from the end plate.

Referring to FIGs. 8 and 13, in some embodiments, a fourth elastic member 473 is disposed between the fourth pressing member 472 and the fourth driving member 471.

The fourth elastic member 473 refers to an elastic structure in the fourth pressing structure 47. The fourth elastic member 473 may be a spring, a rubber column, or other elastic structures. The material of the fourth elastic member 473 may include metal, plastic, or other elastic materials.

The fourth elastic member 473 is disposed between the fourth driving member 471 and the fourth pressing member 472; that is, one end of the fourth elastic member 473 is connected to the fourth driving member 471, and the other end of the fourth elastic member 473 is connected to the fourth pressing member 472. The fourth elastic member 473 may be detachably connected to the fourth pressing member 472 and the fourth driving member 471 by means of a snap-fit connection, a screw connection, or the like. The fourth elastic member 473 may also be fixedly connected to the fourth pressing member 472 and the fourth driving member 471 by means of bonding, welding, or the like.

When the fourth pressing structure 47 moves close to the battery module 200, the fourth elastic member 473 and the fourth pressing member 472 synchronously move close to the battery module 200 until the fourth pressing member 472 contacts the end plate of the battery module 200. When the fourth pressing member 472 contacts the electrode terminal 61, the fourth driving member 471 continues to drive the fourth pressing member 472 to move in the direction close to the battery module 200. In this case, the fourth elastic member 473 is compressed, and the elastic force of the fourth elastic member 473 acts on the fourth pressing member 472, such that the fourth pressing member 472 can press the end plate.

In addition, the fourth elastic member 473 can further provide buffering, thereby reducing possible collision and impact generated when the fourth pressing member 472 contacts the end plate.

Referring to FIGs. 6 and 9, in some embodiments, the third pressing structure 46 and/or the fourth pressing structure 47 are detachably connected to the substrate 43.

Since battery modules 200 of different specifications generally have different lengths, and the spacings between the end plates at both ends of the battery modules 200 are also different, one of the third pressing structure 46 and the fourth pressing structure 47 may be detachably connected to the substrate 43, and the other of the two may be fixedly connected to the substrate 43. During use of the heating device, the one of the third pressing structure 46 and the fourth pressing structure 47 that is fixedly connected to the substrate 43 is opposite to one end plate, and then the position of the movable one of the two is adjusted, so as to adapt to the battery modules 200 of different specifications.

Both the third pressing structure 46 and the fourth pressing structure 47 may also be detachably connected to the substrate 43 so as to better adapt to the battery modules 200 of different specifications.

The third pressing structure 46, the fourth pressing structure 47, and the substrate 43 may be detachably connected by means of a snap-fit connection, a screw connection, or the like, or may be detachably connected to the substrate 43 by other means.

For example, a mounting hole 431 extending through the substrate 43 may be formed in the substrate 43. The third driving member 461 and the fourth driving member 471 of the respective third pressing structure 46 and the fourth pressing structure 47 may be snap-fitted into the mounting hole 431, and enable the third pressing member 462 and the fourth pressing member 472 to move in the direction close to the battery module 200. A plurality of mounting holes 431 may be provided and formed at different positions of the substrate 43, such that the third pressing structure 46 and the fourth pressing structure 47 can be mounted at different positions of the substrate 43, thereby enabling the third pressing structure 46 and the fourth pressing structure 47 to adapt to battery modules 200 of different specifications.

In the embodiments, the third pressing structure 46 and the fourth pressing structure 47 are detachably connected to the substrate 43, such that the third pressing structure 46 and the fourth pressing structure 47 can be mounted at different positions to adapt to battery modules 200 of different specifications, and the replacement and maintenance of the third pressing structure 46 and the fourth pressing structure 47 are also facilitated.

Referring to FIGs. 8, 12, and 13, in some embodiments, the positioning assembly 40 further includes a fifth pressing member 481 disposed on the substrate 43. The fifth pressing member 481 is disposed on a side, opposite to the third pressing structure 46, of the fourth pressing structure 47, and/or the fifth pressing member 481 is disposed on a side, opposite to the fourth pressing structure 47, of the third pressing structure 46.

The fifth pressing member 481 is a structure in the positioning assembly 40 that is mainly configured to press an end plate. The fifth pressing member 481 may be of a columnar structure, such as a cylindrical structure, a prismatic structure, or structures of other shapes. The shape of the fifth pressing member 481 may also be other regular or irregular shapes. The material of the fifth pressing member 481 may include metal, plastic, or other materials.

The fifth pressing member 481 may be fixedly connected to the substrate 43. For example, the fifth pressing member may be fixedly connected to the substrate 43 by means of adhesive bonding, welding, or the like.

The fifth pressing member 481 may be disposed on the side, opposite to the third pressing structure 46, of the fourth pressing structure 47. During use of the positioning assembly 40, the fifth pressing member 481 may be first positioned opposite to the end plate at one end of the battery module 200, and then the position of the third pressing structure 46 is adjusted such that the third pressing structure is positioned opposite to the end plate at the other end of the battery module 200.

The fifth pressing member 481 may also be disposed on the side, opposite to the fourth pressing structure 47, of the third pressing structure 46. During use of the positioning assembly 40, the fifth pressing member 481 may be first positioned opposite to the end plate at one end of the battery module 200, and then the position of the fourth pressing structure 47 is adjusted such that the fourth pressing structure is positioned opposite to the end plate at the other end of the battery module 200.

A plurality of fifth pressing members 481 may also be provided and may be disposed on the side, opposite to the third pressing structure 46, of the fourth pressing structure 47 and the side, opposite to the fourth pressing structure 47, of the third pressing structure 46. In this case, the positions of the fifth pressing members 481 may be determined based on the specifications of the battery modules 200 that are frequently processed by the heating device.

In the embodiments, the fifth pressing member 481 is disposed on the substrate 43 for pressing a battery module 200 of a specific size, thereby reducing the adjustment process of the third pressing structure 46 and the fourth pressing structure 47, and further simplifying the operation process.

Referring to FIGs. 8, 12, and 13, in some embodiments, a fifth elastic member 482 is disposed between the fifth pressing member 481 and the substrate 43.

The fifth elastic member 482 refers to an elastic structure in the positioning assembly 40. The fifth elastic member 482 may be a spring, a rubber column, or other elastic structures. The material of the fifth elastic member 482 may include metal, plastic, or other elastic materials.

The fifth elastic member 482 is disposed between the substrate 43 and the fifth pressing member 481; that is, one end of the fifth elastic member 482 is connected to the substrate 43, and the other end of the fifth elastic member 482 is connected to the fifth pressing member 481. The fifth elastic member 482 may be detachably connected to the fifth pressing member 481 and the substrate 43 by means of a snap-fit connection, a screw connection, or the like. The fifth elastic member 482 may also be fixedly connected to the fifth pressing member 481 and the substrate 43 by means of bonding, welding, or the like.

When the fifth pressing structure moves close to the battery module 200, the fifth elastic member 482 and the fifth pressing member 481 synchronously move close to the battery module 200 until the fifth pressing member 481 contacts the end plate of the battery module 200. When the fifth pressing member 481 contacts the electrode terminal 61, the substrate 43 continues to move in the direction close to the battery module 200. In this case, the fifth elastic member 482 is compressed, and the elastic force of the fifth elastic member 482 acts on the fifth pressing member 481, such that the fifth pressing member 481 can press the end plate.

In addition, the fifth elastic member 482 can further provide buffering, thereby reducing possible collision and impact generated when the fifth pressing member 481 contacts the end plate.

In the embodiments, the fifth elastic member 482 is provided, such that the fifth pressing structure can apply a pressing force to the end plate through the deformation of the fifth elastic member 482, thereby improving the pressing effect. In addition, the fifth elastic member 482 can further provide buffering when the fifth pressing member 481 contacts the end plate, thereby reducing collision damage to the end plate.

Referring to FIGs. 2 to 5, in some embodiments, the heating apparatus 100 further includes a bearing member 20. The bearing member 20 is disposed in the second position and is configured to bear the battery module 200.

The bearing member 20 refers to a structure in the heating apparatus 100 that is mainly configured to bear the battery module 200. The bearing member 20 may be of a plate-shaped structure, such as a square plate, a circular plate, or plate structures of other shapes. The bearing member 20 may also be of a columnar structure forming a platform, such as a cylindrical platform, a prismatic platform, or column structures of other shapes. The bearing member 20 may also be of a structure of other shapes. The material of the bearing member 20 may include metal, plastic, or other materials.

The bearing member 20 may be fixedly connected to the bottom plate 10. For example, the bearing member 20 may be connected to the bottom plate 10 by means of welding, bonding, or the like. The bearing member 20 may also be detachably connected to the bottom plate 10. For example, the bearing member 20 may be connected to the bottom plate 10 by means of a screw connection, a snap-fit connection, or the like.

The bearing member 20 is disposed in the second position so as to bear the battery module 200. For example, a length direction X of the bearing member 20 may be parallel to the length direction X of the battery module 200, and a width direction Y of the bearing member 20 may be parallel to the width direction Y of the battery module 200.

In the embodiments, the bearing member 20 is disposed in the second position so as to support the battery module 200 by means of the bearing member 20.

Referring to FIGs. 2 to 5, in some embodiments, the heating apparatus 100 further includes heating and pressure-applying assemblies 50 disposed on two sides of the second position. The heating and pressure-applying assemblies 50 are configured to heat and/or apply pressure to the battery module 200.

The heating and pressure-applying assembly 50 refers to a structure in the heating apparatus 100 that is configured to heat and apply pressure to the battery module 200. The heating and pressure-applying assembly 50 may heat the battery module 200 by means of a heating wire, or may heat the battery module 200 by air heating or other means. The heating and pressure-applying assembly 50 may further include a structure capable of pressing the battery module 200, so as to apply pressure to the battery module 200.

The heating and pressure-applying assemblies 50 are disposed on two opposite sides of the second position, so as to heat and apply pressure to the side surfaces of the battery module 200.

In a second aspect, the present application further provides a battery processing system. The battery processing system includes the heating apparatus 100 according to some embodiments of the first aspect. The battery production system may heat and apply pressure to the battery module 200 after completion of assembly of the battery module 200, so as to improve the safety performance of the battery module 200 and improve the stability of the battery module 200.

The above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some of the technical features; however, these modifications or substitutions do not make the essence of the corresponding technical solutions deviate from the spirit and scope of the technical solutions in the embodiments of the present application, and should all fall within the protection scope of the present application.

## Claims

1. A heating apparatus for heating a battery module, the heating apparatus comprising:
a bottom plate provided with a first position and a second position that are disposed in a staggered manner, the second position being configured for placement of the battery module;
a bracket movably connected to the bottom plate and configured to move between a first position and a second position; and
a positioning assembly configured to press an electrode terminal of the battery module;
wherein the positioning assembly is movably disposed on the bracket; in a case where the bracket moves to the first position, the positioning assembly at least partially provides clearance for an area above the second position; in a case where the bracket moves to the second position, the positioning assembly is above the second position and is movable in a direction close to the bottom plate.

2. The heating apparatus according to claim 1, wherein in the case where the bracket moves to the first position, an orthographic projection of the positioning assembly on the bottom plate and the second position are disposed in a staggered manner.

3. The heating apparatus according to claim 1 or 2, wherein the bracket is movably disposed in a width direction of the bottom plate, and the first position and the second position are sequentially arranged in the width direction of the bottom plate.

4. The heating apparatus according to any one of claims 1 to 3, wherein a first guide structure and a first driving member are disposed on the bottom plate, the bracket is slidably connected to the first guide structure, and the first driving member is configured to drive the bracket to slide along the first guide structure.

5. The heating apparatus according to any one of claims 1 to 4, wherein the positioning assembly comprises a first pressing structure and a second pressing structure, the first pressing structure and the second pressing structure being configured to press electrode terminals corresponding to two electrodes of the battery module, respectively;
the first pressing structure is movable in a first direction relative to the second pressing structure so as to move close to or away from the second pressing structure.

6. The heating apparatus according to claim 5, wherein the first pressing structure comprises a first base capable of moving close to or away from the second pressing structure, at least two first pressing members are sequentially disposed on the first base in a second direction, and the first pressing members are configured to press at least two electrode terminals, arranged in the second direction, of the battery module;
the second direction is perpendicular to the first direction.

7. The heating apparatus according to claim 6, wherein a first elastic member is disposed between the first pressing member and the first base.

8. The heating apparatus according to any one of claims 5 to 7, wherein the second pressing structure comprises a second base, at least two second pressing members are sequentially disposed on the second base in the second direction, and the second pressing members are configured to press at least two electrode terminals, arranged in the second direction, of the battery module;
the second direction is perpendicular to the first direction.

9. The heating apparatus according to claim 8, wherein a second elastic member is disposed between the second pressing member and the second base.

10. The heating apparatus according to any one of claims 5 to 9, wherein two first pressing structures and two second pressing structures are provided, the two second pressing structures are disposed adjacent to each other, and the second pressing structures are located between the two first pressing structures.

11. The heating apparatus according to any one of claims 5 to 10, wherein the positioning assembly further comprises a substrate, the substrate is movably disposed on the bracket, and the substrate is configured to move in a direction close to or away from the bottom plate;
both the first pressing structure and the second pressing structure are disposed on the substrate.

12. The heating apparatus according to claim 11, wherein the first pressing structure is movably connected to the substrate in the first direction, and the second pressing structure is fixedly connected to the substrate.

13. The heating apparatus according to claim 12, wherein a second guide structure extending in the second direction is disposed on the substrate, and the first pressing structure is slidably disposed on the second guide structure.

14. The heating apparatus according to claim 13, wherein at least two connecting structures are spaced apart from each other in the first direction on the second guide structure;
the first pressing structure further comprises a connecting member, and the connecting member is configured to be connected to the connecting structure so as to fix the first pressing structure.

15. The heating apparatus according to any one of claims 11 to 14, wherein the positioning assembly further comprises a second driving member disposed on the bracket, and the second driving member is configured to drive the substrate to move relative to the bracket.

16. The heating apparatus according to any one of claims 11 to 15, wherein a third pressing structure and a fourth pressing structure spaced apart from each other in the second direction are further disposed on the substrate, and the third pressing structure and the fourth pressing structure are configured to press an end plate of the battery module;
the second direction is perpendicular to the first direction.

17. The heating apparatus according to claim 16, wherein the third pressing structure comprises a third driving member disposed on the substrate and a third pressing member disposed on the third driving member, and the third driving member is configured to drive the third pressing member to move in the direction close to or away from the bottom plate;
the fourth pressing structure comprises a fourth driving member disposed on the substrate and a fourth pressing member disposed on the fourth driving member, and the fourth driving member is configured to drive the fourth pressing member to move in the direction close to or away from the bottom plate.

18. The heating apparatus according to claim 16 or 17, wherein the third pressing structure and/or the fourth pressing structure are detachably connected to the substrate.

19. The heating apparatus according to claim 17, wherein a third elastic member is disposed between the third pressing member and the third driving member, and a fourth elastic member is disposed between the fourth pressing member and the fourth driving member.

20. The heating apparatus according to any one of claims 16 to 19, wherein the positioning assembly further comprises a fifth pressing member disposed on the substrate;
the fifth pressing member is disposed on a side, opposite to the third pressing structure, of the fourth pressing structure, and/or the fifth pressing member is disposed on a side, opposite to the fourth pressing structure, of the third pressing structure.

21. The heating apparatus according to claim 20, wherein a fifth elastic member is disposed between the fifth pressing member and the substrate.

22. The heating apparatus according to any one of claims 1 to 21, wherein the heating apparatus further comprises a bearing member, and the bearing member is disposed in the first position and is configured to bear the battery module.

23. The heating apparatus according to any one of claims 1 to 22, wherein the heating apparatus further comprises heating and pressure-applying assemblies disposed on two sides of the second position, and the heating and pressure-applying assemblies are configured to heat and/or apply pressure to the battery module.

24. A battery processing system, comprising the heating apparatus according to any one of claims 1 to 23.
